# EUROPEAN PATENT APPLICATION

(11) **EP 2 594 127 A2**
(43) Date of publication of application: **22.05.2013**
(21) Application number: 12192870.9
(22) Date of filing: 15.11.2012
(51) Int. Cl.: A01G 1/12

(54) **Lawn sweeper height adjustment assembly**

(30) Priority: 15.11.2011 US 201113297001
(71) Applicant: Agri-Fab, Inc., Sullivan, IL 61951 (US)
(72) Inventor: Hickenbottom, Ronald, Sullivan, IL Illinois 61951 (US)
(74) Representative: Bartle, Robin Jonathan

(57) **Abstract**

A height adjustment assembly for a lawn sweeper includes a clip (124) that has a body portion (130) with an aperture (132), a tab (134) that extends into a slot (122) on a lawn sweeper unit (102) and a projection (138) that engages the lawn sweeper unit, a shaft (126) that engages the body portion and a fastener (128) to movably secure the clip to the lawn sweeper unit in a desired position.

## Description

### Field of the Disclosure

The present disclosure generally relates to a lawn sweeper assembly, and more particularly, to a height adjustment assembly for a lawn sweeper including, among other things, fewer parts and simplified adjustment.

### Background

Lawn sweeping is a conventional technique used by many homeowners, gardeners, and groundskeepers to collect unwanted debris from a lawn. Such unwanted debris may include, for example, grass clippings, leaves (mulched or whole), and/or pine needles. A well groomed lawn gives a good first impression, whether the well groomed lawn is associated with a business or a home. Furthermore, a well groomed lawn is part of living the "American dream." For these reasons, among others, a need exists, for an improved lawn sweeper for collecting debris from a lawn.

Lawn sweepers are used in various ways for maintaining a well-groomed lawn. For example, groundskeepers will often mow a lawn, thereby creating grass clippings and autumnshed leaves. In some instances, mulching the leaves is preferred, as many people are required to compact and bag their lawn refuse for pickup. Thus, a groundskeeper may even make multiple passes to further mulch the leaves and other lawn debris.

Current lawn sweepers generally include a height adjustment device in order to dispose the brush at a desired distance from the ground. One group of such devices uses some form of a strap to pivotal ly mount the ground engaging heel to the lawn sweeper. Briefly, the ground engaging wheel is mounted to one distal end of the strap, the strap is mounted to the lawn sweeper in the middle section and an adjustment end is disposed opposite the ground engaging wheel at an other distal end. For example only, see U.S. Patent Nos. 3,591,883 and 5,408,813 and U.S. Publication Nos. US 2007/0107404 and US 2009/0235472. Another group of such devices uses a plate configuration to provide height adjustment for the lawn sweeper. Briefly, the ground engaging wheel is mounted to one distal end of the plate with a engagement element is disposed opposite the ground engaging wheel and an opposite distal end of the plate is mounted to the lawn sweeper. The engagement element is selectively connectable to the lawn sweeper to thereby provide pivotal movement with respect to the opposite end of the plate. For example only, see U.S. Patent Nos. 5,845,471 and 6,041,584. The disadvantages associated with this group of height adjustment devices include, among others, complexity, expensive production and construction and numerous parts.

There are other existing height adjustment devices for lawn implement ground engaging wheels. One example includes a lawn edger having a wheel connected to an arcuate slot of a bracket by a shaft and a nut that can be grasped by the user to lock the shaft with the wheel in a desired position relative to the bracket. Another example includes an axle assembly having a plate portion where the axle shaft is a cylindrical bore having a shot pin that extends through the bore with a conical end received in one of the apertures in the plate. A spring biases the shot pin in the direction of the plate and the end into one of the apertures. The entire axle assembly may be pivoted about the point thus changing the position of the wheel relative to the housing. For example only, see U.S. Patent Nos. 3,802,173 and 5,490,371. The disadvantages associated with this group of height adjustment devices include, among others, non-secure positioning resulting from heavy loads or impact or shock loads.

The disadvantages of current lawn sweeper assemblies outlined above, among other things, are overcome by a height adjustment assembly with fewer parts that may be easily used in connection with a lawn sweeper assembly and provides a clip that engages the lawn sweeper such that the height of the wheel may be adjusted and secured in position relative to the lawn sweeper.

Therefore, there is a need in the art for a lawn sweeper height adjustment assembly that overcomes the disadvantages of the prior art and provides the advantages as described in this disclosure.

### Brief Description of the Drawings

The following disclosure as a whole may be best understood by reference to the provided detailed description when read in conjunction with the accompanying drawings, drawing description, abstract, background, field of the disclosure, and associated headings. Identical reference numerals when found on different figures identify the same elements or a functionally equivalent element. The elements listed in the abstract are not referenced but nevertheless refer by association to the elements of the detailed description and associated disclosure.

FIG. 1 is a perspective view of a lawn sweeper assembly in accordance with one embodiment of the present disclosure.

FIG. 2 is a detailed perspective view of the lawn sweeper of FIG. 1.

FIG. 3 is an exploded view of the lawn sweeper of FIG. 2.

FIG. 4 is a cross section view of the lawn sweeper of FIG. 2, taken along line 4-4.

### Detailed Description

The present disclosure is not limited to the particular details of the apparatus depicted, and other modifications and applications may be contemplated. Further changes may be made in the apparatus, device or methods without departing from the true spirit of the scope of the disclosure herein involved. It is intended, therefore, that the subject matter in this disclosure should be interpreted as illustrative, not in a limiting sense.

In one aspect of the present disclosure, a height adjustment assembly for a lawn sweeper may include a clip that may have a body portion with an aperture, a tab that extends into a slot on the lawn sweeper and a projection that engages the lawn sweeper, a shaft that engages the body portion and a fastener to movably secure the clip to the lawn sweeper in a desired position.

In another aspect of the present disclosure, a height adjustment assembly for a lawn sweeper may include an end panel of a housing including an interior surface, an exterior surface and a slot defined in the end panel that extends from the interior surface to the exterior surface, a clip selectively contiguous with the end panel that may include a body portion having an aperture, a tab that extends from a longitudinal end of the body portion into the slot and a projection that extends from a lateral side of the body portion to engage the interior surface. A wheel may be disposed adjacent the exterior surface and include a center opening. A shaft may extend through the aperture and center opening, where the shaft includes an inner end contiguous with the body portion and an outer end. A fastener may selectively engage the outer end in order to movably secure the clip to the end panel in a desired position and secure the wheel to the shaft.

In yet another aspect of the present disclosure, a lawn sweeper may include a housing including a main central portion and an end panel disposed at a longitudinal end of the main central portion, said end panel including an interior surface, an exterior surface and a slot defined in the end panel that extends from the interior surface to the exterior surface. A clip may be selectively contiguous with the end panel and include a body portion having an aperture, a tab that extends from a longitudinal end of the body portion into the slot and a projection that extends from a lateral side of the body portion to engage the interior surface. A wheel may be disposed adjacent the exterior surface and include a center opening. A shaft may extend through the aperture and center opening where the shaft may include an inner end contiguous with the body portion and an outer end. A fastener may be in selective engagement with the outer end in order to movably secure the clip to the end panel in a desired position and secure the wheel to the shaft.

In other aspects of the present disclosure, the aperture may be non-circular or the projection may include a distal end having a chisel configuration. The selective engagement of the fastener to the outer end may deflect the body portion against the projection to generate a biasing force to prevent movement of the clip with respect to the end panel. The shaft may includes a formation disposed adjacent the inner end that complementarily engages the aperture or the formation may include a non-circular cross-section.

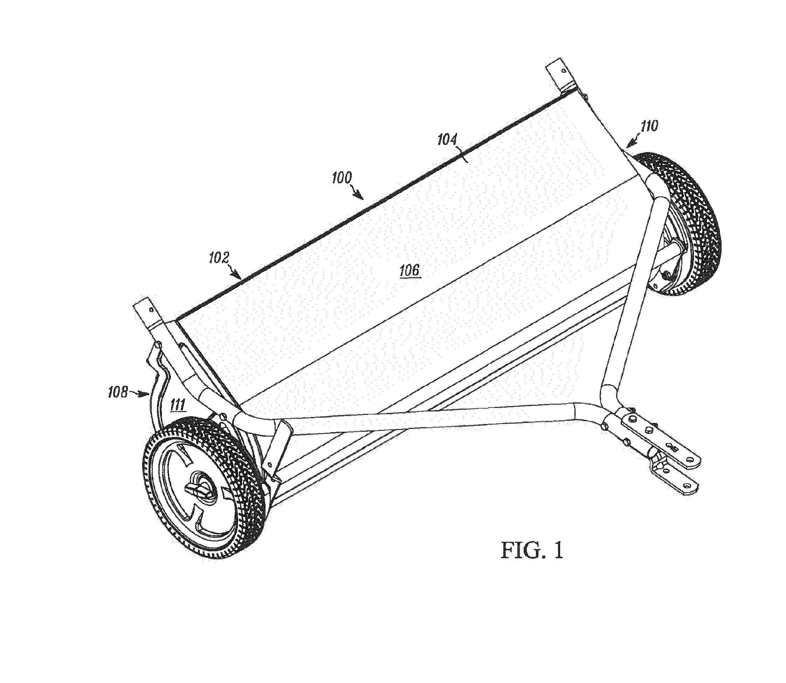

FIG. 1 is a perspective view of a lawn sweeper assembly 100 in accordance with one embodiment of the present disclosure. Lawn sweeper assembly 100 may include lawn sweeper unit 102 and hopper assembly (not shown), which in one example may be a hopper bag assembly (i.e., the hopper assembly may include a bag, although in other examples, the hopper assembly may include any suitable means for retaining collected debris, such as a more rigid plastic hopper or other suitable container as would be known to one of ordinary skill in the art).

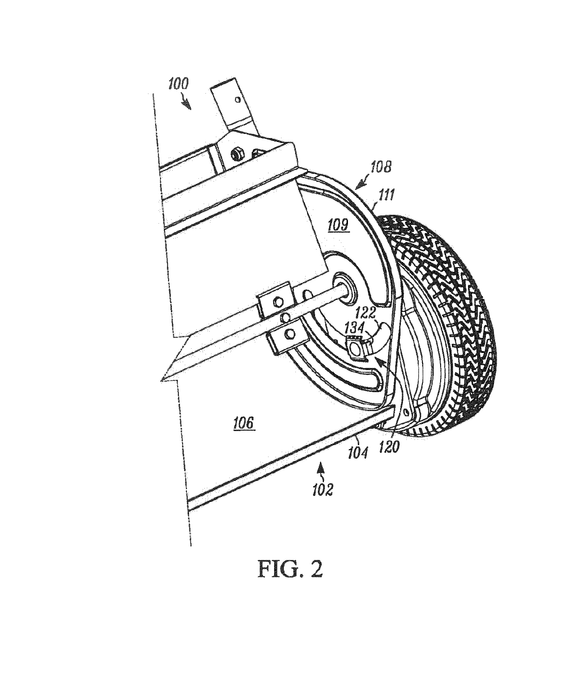

The lawn sweeper unit 102 may include a housing 104, which includes a central portion 106, a first end panel 108, and a second end panel 110. The first and second end panels 108, 110 are disposed at opposite longitudinal ends of the housing and contiguous with the central position 106. In the particular embodiment shown in FIG. 1, central portion 106 may be configured as a front panel that forms a convex surface so as to define a front and top surface. The housing 104 may also include separate top panel and front panel of the central portion 106, if desired. Furthermore, the housing may be formed from a common mold defining the central portion 106 and end panels 108, 110. One having ordinary skill in the art will recognize other alternatives for forming housing 104. The first and second end panels 108, 110 each include an interior surface 109 (see FIGS. 2-4) and an exterior surface 111.

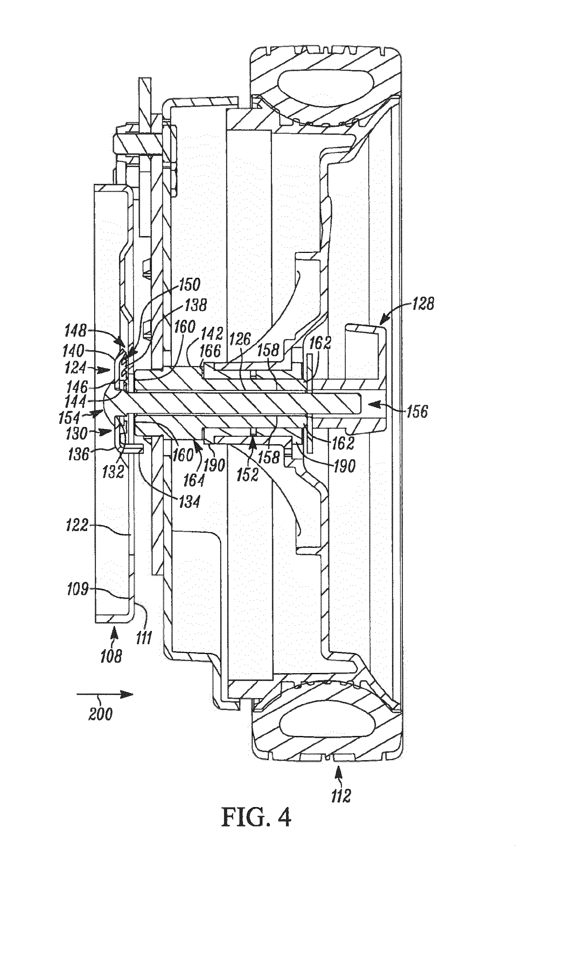

The lawn sweeper unit 102 may include a first wheel 112 connected to the first side panel 108 adjacent to the exterior surface 111 of the housing 104 and a second wheel 114 connected to the second side panel 110 adjacent to the exterior surface 111 of housing 104. The wheels 112, 114 may be connected to the side panels 110, 112 by any suitable means. As best seen in FIGS. 2 and 4, for example, wheels 112, 114 may be connected to respective side panels 108 and 110 by an assembly as taught in this disclosure.

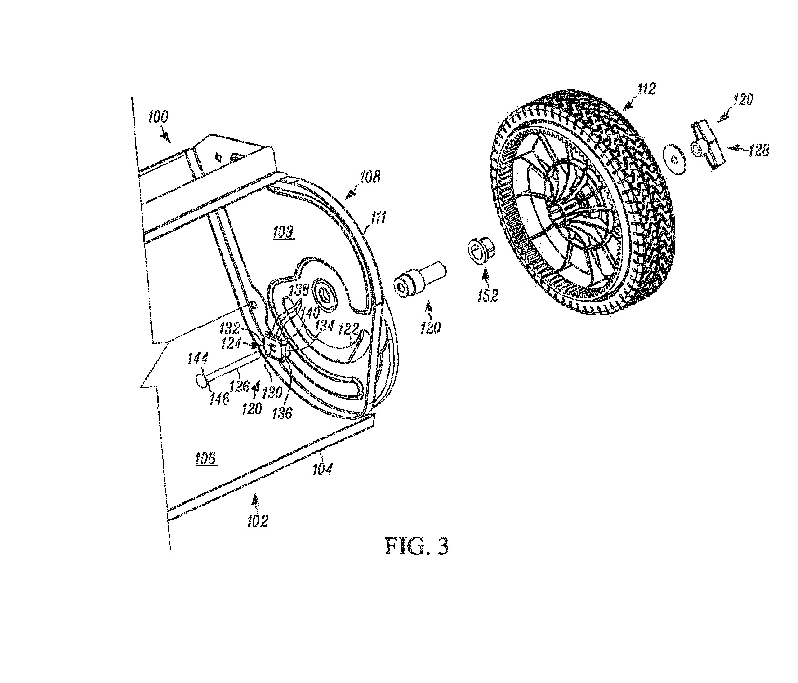

FIG. 2 is a detailed perspective view of the lawn sweeper 100 of FIG. 1 illustrating a height adjustment assembly 120 in accordance with one embodiment of the present disclosure. The end panel 108 may include a slot 122 defined in the end panel 108 that extend from the interior surface 109 to the exterior surface 111. The slot 122 may have any desirable configuration, such as, for example only, linear, angled, arcuate, semi-circular, serpentine, etc. or any other configuration necessary to provide the intended functionality. The height adjustment assembly 120 may include a clip 124, a shaft 126, a fastener 128 (see FIGS. 3 and 4), a bushing 142 (see FIGS. 3 and 4) and the wheel 112.

FIG. 3 is an exploded view of the lawn sweeper of FIG. 2. In one embodiment, the clip 124 may be selectively contiguous with the end panel 108 (in particular, the interior surface 109), as further described herein. Preferably, the clip 124 may include a body portion 130 that may have an aperture 132, a tab 134 that may extend from a longitudinal end 136 of the body portion 130 into the slot 122 (see FIGS. 2 and 4) and a projection 138 that may extend from a lateral side 140 of the body portion 130 to engage the interior surface 109. The clip 124 may be formed of any suitable material, including without limitation, steels, metals, plastics, composites, natural and man-made compositions, etc., capable of the intended functionality. In one embodiment, the aperture 132 may be non-circular and have any suitable configuration. In another embodiment, the shaft 126 may include a formation 144 disposed adjacent an inner end 146 that complimentarily engages the aperture 132 so as to prevent rotation of the shaft 126 with respect to the fastener 128 when attaching the height adjustment assembly 120 to the lawn sweeper 100 or adjusting the height as described herein. In an embodiment, the formation 144 may include a non-circular cross-section. It is within the teachings of this disclosure that the aperture and/or formation may have a configuration that includes but is not limited to circular, oval, oblong, obround, square, rectangle, triangle, multi-sided, star, splined, etc. In one embodiment, the tab 134 may have a configuration that closely matches the slot 122. In particular embodiments, the tab 134 may have an interference fit, clearance fit or slightly looser fit within the slot 122 so as to facilitate relatively little rotational movement of the clip 124 with respect to the end panel 108 such that the clip 124 remains aligned so that a substantial majority of the projections 138 with engage the interior surface 109 and thereby provide beneficial gripping engagement. As shown in FIG. 4, preferably the tab 134 may extend through the slot 122 so that a distal end of the tab 134 is disposed as extending from the exterior surface 111 closer to the wheel 112 than the end panel 108. In one embodiment, the clip 124 may include a pair of tabs 134 disposed at opposed longitudinal ends 136 of the body portion 130.

In one embodiment, as shown in FIG. 4, the projection 138 may include a distal end 148 having a chisel configuration 150, which may house any suitable configuration, such as, but not limited to, a scooped, scalloped or concave end presenting a single pair or plurality of pointed and angled portions at the corners of or along the length or width of the distal end 148, a straight angled chisel face, etc. Preferably, the distal end 148 grippingly engages the end panel 108 such that the chisel configuration 150 slightly indents or deforms the end panel 108 so as to lockingly secure the clip 124 against unvented, undesired or unintentional movement. Accordingly, in one embodiment the clip 124 may be termed from a material that has a higher strength property than the end panel 108. In one embodiment, the projections 138 may extend from both lateral sides 140 of the body portion 130.

Preferably, the wheel 112 may include a center opening 152 that is configured to receive the bushing 142 and the shaft 126 as described herein. In one embodiment, sleeves 190 (solid, single, dual, split, etc.) may be disposed in the center opening 152 to align, interface, connect, size, etc. the bushing 142 with the wheel 112 center opening 152. Otherwise, the wheel 112 has a configuration like any other conventional wheel useful in connection with a lawn sweeper assembly.

In one embodiment, the shaft 126 may be configured similar to a bolt having an inner end 154 having an enlarged configuration similar to the head of a bolt that is preferably contiguous with the body portion 130 and another end 156 having a configuration complementary to the fastened 128 so as to facilitate secure engagement between the two parts, such as, for example only, screw threads, splines, over center latch, camming surfaces, etc. Preferably, the shaft 126 extends through the aperture 132, bushing 142 and center opening 152 to facilitate selective movable securement of the clip 124 to the end panel 108 in a desired position and to secure the wheel 112 to the shaft 126.

In one embodiment, a fastener 128 may be in selective complementary engagement (of any suitable form to facilitate the desired functionality) with the outer end 156 whereby the body portion 130 may be deflected in the direction of arrow 200 against the projections 138 to generate a biasing force and to prevent movement of the clip 124 with respect to the end panel 108 and to secure the fastener 128 against movement that may otherwise result from vibration during operation. Preferably, the force that deflects the body portion 180 also acts upon the chisel configuration 150 so as to deform the end panel 108 where in contact for locking engagement. A washer 168 may be provided between the fastener 128 and bushing 142 for conventional functionality.

In one embodiment, as shown in FIGS. 3 and 4, the bushing 142 may include a bore 158 configured to receive the shaft 126, a first end 160 contiguous with the exterior surface 111 of the end panel 108 and a second end 162 adjacent the fastened 128 and the outer end 156. The bushing 142 may also include an annulet 164 formed on the bushing between the first and second ends 160, 162 defining a shoulder 166 contiguous with the wheel 112 to dispose the wheel 112 at a predetermined distance from the end panel 108 exterior surface 111. Another shoulder defined by the annulet engages the brush height adjustment assembly.

In operation, the shaft 126 is inserted into or received through the aperture 132, slot 122, bushing 142 and center opening 152. The tab 134 is aligned in registration with the slot 122 and the projections 138 contiguous with the interior surface 109. The fastener 128 is connected to the outer end 156 so as to movably secure the clip 124 to the end panel 108 in a desired position and to secure the wheel 112 to the shaft 126. Preferably, the opposite end panel 110 includes a similar or identical independent height adjustment assembly. To change the desired position, the fastener 128 is loosened (and preferably not disconnected) to remove the biasing force so that the height adjustment assembly 120 may be moved along the slot 122 to another desired position where the fastener 128 is tightened as described above.

Furthermore, while the particular preferred embodiments have been shown and described, it is obvious to those skilled in the art that changes and modifications may be made without departing from the teaching of the disclosure. The matter set forth in the foregoing description and accompanying drawings is offered by way of illustration only and not as limitation. The actual scope of the disclosure is intended to be defined in the following claims when viewed in their proper perspective based on the related art.

## Claims

1. A lawn sweeper comprising:
a housing including a central portion and an end panel disposed at a longitudinal end of the central portion, said end panel including an interior surface, an exterior surface and a slot defined in the end panel that extends from the interior surface to the exterior surface:
a clip selectively contiguous with the end panel, said clip including a body portion having an aperture, a tab that extends from a longitudinal end of the body portion into the slot and a projection that extends from a lateral side of the body portion to engage the interior surface;
a wheel disposed adjacent the exterior surface, said wheel including a center opening;
a shaft that extends through the aperture and center opening, the shaft including an inner end contiguous with the body portion and an outer end; and
a fastener in selective engagement with the outer end in order to movably secure the clip to the end panel in a desired position and secure the wheel to the shaft.

2. The lawn sweeper of claim 1, wherein the aperture is non-circular.

3. The lawn sweeper of claim 1, wherein the projection includes a distal end having a chisel configuration.

4. The lawn sweeper of claim 1, wherein the selective engagement of the fastener to the outer end deflects the body portion against the projection to generate a biasing force to prevent movement of the clip with respect to the end panel.

5. The lawn sweeper of claim 1, wherein the shaft includes a formation disposed adjacent the inner end that complementarily engages the aperture.

6. The lawn sweeper of claim 5, wherein the formation includes a non-circular cross-section.

7. The lawn sweeper of claim 1, further comprising a bushing including a through-bore configured to receive the shaft, a first end contiguous with the exterior surface of the end panel and a second end adjacent the fastener and the outer end.

8. The lawn sweeper of claim 7, further comprising an annulet formed on the bushing between the first and second ends defining a shoulder contiguous with the wheel to dispose the wheel at a predetermined distance from the end panel exterior surface.

9. A height adjustment assembly for a lawn sweeper including an end panel of a housing including an interior surface, an exterior surface and a slot defined in the end panel that extends from the interior surface to the exterior surface, the height adjustment assembly comprising:
a clip selectively contiguous with the end panel, said clip including a body portion having an aperture, a tab that extends from a longitudinal end of the body portion into the slot and a projection that extends from a lateral side of the body portion to engage the interior surface;
a bushing include a through-bore, a first end contiguous with the exterior surface of the end panel and a second end;
a wheel disposed adjacent the exterior surface, said wheel including a center opening;
a shaft that extends through the aperture through-bore and center opening, the shaft including an inner end contiguous with the body portion and an outer end;
a fastener in selective engagement with the outer end and the second end in order to selectively movably secure the clip to the end panel in one of various predetermined positions and to secure the wheel to the shaft.

10. The lawn sweeper of claim 9, wherein the aperture is non-circular.

11. The lawn sweeper of claim 9, wherein the projection includes a distal end having a chisel configuration.

12. The lawn sweeper of claim 9, wherein the selective engagement of the fastener to the outer end deflects the body portion against the projection to generate a biasing force that forces a distal end of the projection having a chisel configuration into the end panel to prevent movement of the clip with respect to the end panel.

13. The lawn sweeper of claim 9, wherein the shaft includes a formation disposed adjacent the inner end that complementarily engages the aperture.

14. The lawn sweeper of claim 13, wherein the formation includes a non-circular cross-section.

15. The lawn sweeper assembly of claim 9, further comprising an annulet formed on the bushing between the first and second ends defining a shoulder contiguous with the wheel to dispose the wheel at a predetermined distance from the end panel exterior surface.
